# EUROPÄISCHE PATENTSCHRIFT

(11) **EP 1 387 454 B1**
(45) Veröffentlichungstag und Bekanntmachung des Hinweises auf die Patenterteilung: **10.03.2004**
(21) Anmeldenummer: 02023260.9
(22) Anmeldetag: 17.10.2002
(51) Int. Cl.: H02B 1/21

(54) **Geräteeinheit mit einem Kontakt zum steckbaren Verbinden mit einer ortsfesten Stromschiene**
Apparatus with a plug-in contact for connection to a fixed busbar
Dispositif avec contact enfichable pour raccordement à une barre omnibus fixe

(43) Veröffentlichungstag der Anmeldung: 04.02.2004
(73) Patentinhaber: Jean Müller GmbH Elektrotechnische Fabrik, 65343 Eltville (DE)
(72) Erfinder:
(74) Vertreter: Quermann, Helmut, Dipl.-Ing.

(56) Entgegenhaltungen:
- DE-C- 10 062 644
- US-A- 4 136 374

## Beschreibung

Die Erfindung betrifft eine Geräteeinheit mit einem Kontakt zum steckbaren Verbinden mit einer ortsfesten Stromschiene, wobei der Kontakt außerhalb eines Gehäuses angeordnet ist, das eine Schalteinheit aufnimmt.

Eine derartige Geräteeinheit ist aus der DE 101 06 270 A1 bekannt. Sie weist mehrere auf flache Stromschienen aufsteckbare Kontakte auf, ferner Anschlussmittel zur elektrischen Verbindung der Kontakte mit einer innerhalb des Gehäuses angeordneten Schalteinheit. Daneben weist diese Geräteeinheit Steuer- und Schutzgeräte auf, die gleichfalls innerhalb des Gehäuses angeordnet sind.

Eine ähnliche Geräteeinheit ist aus der DE 100 55 035 A1 bekannt.

Stromerfassungseinrichtungen finden beispielsweise im Zusammenhang mit der Erfassung des Stromes bei dessen Führung von einem Stromleiter einer NH-Sicherungs- oder -Lastschalteinrichtung zu einer Stromschiene bzw. Sammelschiene Verwendung. Hierbei können die unterschiedlichsten Stromerfassungseinrichtungen eingesetzt werden, beispielsweise induktive Stromwandler, Shunts usw..

Eine mit einem Stromwandler versehene NH-Sicherungs- oder -Lastschalteinrichtung ist aus der EP 0 455 589 A2 bekannt. Bei dieser wird der Wandler zwischen dem leistenförmigen Stromleiter der Sicherungs- oder Lastschalteinrichtung und der zugehörigen Sammelschiene, die benachbart dem Gehäuse der Sicherungs- oder Lastschalteinrichtung ist, mittels einer Schraube, befestigt. Der Stromwandler befindet sich damit innerhalb einer Ausnehmung des Gehäuses. Die Schraube durchsetzt eine Bohrung im leistenförmigen Stromleiter. Sie dient dem Stromwandler als Primärwicklung und ist in die zugeordnete Sammelschiene eingeschraubt. - Bei dieser Wandleranordnung ist ein erheblicher Montageaufwand beim Positionieren und Verdrahten des Wandlers zu verzeichnen. Abgesehen hiervon ist dort kein Kontakt zum Aufstecken auf die Stromschiene vorgesehen.

Ähnliche Einrichtungen sind in der EP 1 109 192 A2 und der DE 100 02 800 A1 beschrieben.

Die DE 100 62 644 C1 offenbart einen Halter für eine Stromerfassungseinrichtung. Bevor die Sammelschiene mit der NH-Sicherungs- oder -Lastschalteinrichtung verbunden wird, wird die Stromerfassungseinrichtung definiert in letztgenannter gehalten, mit der Konsequenz, dass insbesondere die Stromerfassungseinrichtung beim Montieren der Sicherungs- oder -Lastschalteinrichtung nicht lose ist und Montagevorgänge der Sicherungs- oder Lastschalteinrichtung behindert.

Es ist Aufgabe der vorliegenden Erfindung eine Geräteeinheit der Eingangs genannten Art so weiter zu bilden, dass bei dieser eine vorteilhafte Anordnung der Stromerfassungseinrichtung sowie deren besonders einfache Montage gewährleistet ist.

Gelöst wird die Aufgabe bei der Geräteeinheit der Eingangs genannten Art dadurch, dass sie eine Abdeckung und eine Stromerfassungseinrichtung aufweist, wobei die Abdeckung das Gehäuse abdeckt und der zwischen der Abdeckung und dem Gehäuse gebildeten Raum der Aufnahme der Stromerfassungseinrichtung dient, sowie der Kontakt die Stromerfassungseinrichtung und eine Öffnung in der Abdeckung durchsetzt.

Erfindungsgemäß ist somit vorgesehen, dass die Stromerfassungseinrichtung, bei der es sich insbesondere um einen induktiven Stromwandler handelt, außerhalb des Gehäuses angeordnet ist. Der Raum innerhalb des Gehäuses steht damit für die Schalteinheit sowie weitere bei der Geräteeinheit eventuell vorhandene Baueinheiten, wie Steuer- und Schutzgeräte zur Verfügung. Des weiteren ist der Stromerfassungseinrichtung unmittelbar der Kontakt zugeordnet, der auf die ortsfeste Stromschiene aufgesteckt wird. Montagevorgänge, wie beim Stand der Technik unter Verwendung eines Befestigungselementes, insbesondere einer Schraube, sind somit nicht erforderlich. Das Stromerfassungselement ist in einem separat geschaffenen Raum positioniert, der zwischen der Abdeckung und dem Gehäuse gebildet ist. Der Kontakt durchsetzt die Stromerfassungseinrichtung und eine Öffnung in der Abdeckung. Der Kontakt wird in dem Bereich, in dem er aus der Abdeckung ragt, auf die ortsfeste Stromschiene aufgesteckt oder in diese eingesteckt.

Die erfindungsgemäße Gestaltung des Geräteelementes ermöglicht eine besonders einfache Montage der Stromerfassungseinrichtung. Bei abgenommener Abdeckung wird die Stromerfassungseinrichtung auf den Kontakt aufgesteckt und anschließend die Abdeckung mittels geeigneter Befestigungsmittel am Gehäuse befestigt. Die Stromerfassungseinrichtung ist somit zwischen dem Deckel der haubenartigen Abdeckung und der zugeordneten Gehäusewand axial und mittels des die Stromerfassungseinrichtung durchsetzenden Kontaktes radial positioniert.

Es wird als besonders vorteilhaft angesehen, wenn der Kontakt in die Stromschiene aufsteckbar oder in diese einsteckbar ist. Das Aufstecken bzw. Einstecken erfolgt insbesondere in Breitenerstreckung der Stromschiene. Es ergibt sich somit eine große Kontaktfläche.

Eine baulich besonders einfache Gestaltung des Kontaktes bei Verwendung einer flachen Stromschiene mit im wesentlichen rechteckigem Querschnitt ergibt sich, wenn der Kontakt zwei parallele Kontaktschenkel aufweist, die in Kontakt mit abgewandten Seiten der Stromschiene bringbar sind. Die Kontaktschenkel des Kontaktes sind beispielsweise sehr lang ausgebildet, derart, dass sie, ausgehend vom Gehäuse, die Stromerfassungseinrichtung und die Öffnung in der Abdeckung durchsetzen, sowie die aus der Abdeckung herausragenden Endbereiche der Kontaktschenkel der Kontaktierung der Schiene dienen. Da der Bereich des Kontaktes, in dem zwischen der Abdeckung und dem Gehäuse gebildeten Raum, nicht der Kontaktierung der Schiene dient, kann statt dessen der Kontakt eine Anschlusslasche und ein U-förmiges Kontaktstück aufweisen. Die Anschlusslasche durchsetzt dabei die Stromerfassungseinrichtung und es ist das Kontaktstück im wesentlichen außerhalb der Stromerfassungseinrichtung angeordnet und dient der Kontaktierung der Stromschiene. Die Anschlusslasche und das U-förmige Kontaktstück können einteilig oder zweiteilig ausgebildet sein. Im letzten genannten Fall sind Verbindungsmittel zum Verbindung von Anschlusslasche und Kontaktstück vorzusehen.

Ist der Kontakt nicht flach ausgebildet, sondern weist er beispielsweise U-förmigen Querschnitt auf, findet vorzugsweise ein plattenförmiger Kontakt Verwendung, der zwischen die parallelen Schenkel der Stromschiene einsteckbar ist. Auch diese Gestaltung gewährleistet eine große Kontaktfläche zwischen Stromschiene und Kontakt.

Im Sinne der erfindungsgemäßen Lehre braucht die Geräteeinheit nur einen Kontakt zum Aufstecken auf eine Stromschiene aufweisen. In aller Regel wird sie aber mehrere Kontakte, insbesondere drei Kontakte für drei Stromphasen und diesen zugeordnete Stromerfassungseinrichtungen aufweisen. Zwischen der Abdeckung und dem Gehäuse wären in diesem Falle drei Stromerfassungseinrichtungen angeordnet, die vor dem Verbinden der Abdeckung mit dem Gehäuse positioniert werden, indem die Kontakte die Stromerfassungseinrichtungen durchsetzen. Selbstverständlich kann die Geräteeinheit wesentlich mehr Kontakte aufweisen, die die Abdeckung durchsetzen, beispielweise solche der Abgangsseite und der Einspeiseseite. Es ist auch denkbar, dass ein Nullleiter die Abdeckung durchsetzt. Dessen Kontakt ist vorzugsweise entsprechend den vorstehend beschriebenen Kontakten gestaltet und durchsetzt bei mit dem Gehäuse verbundene Abdeckung eine entsprechende Öffnung in der Abdeckung.

Bei der Geräteeinheit können, je nach Anwendung, die Einspeiseseite und die Abgangsseite beliebig gewählt werden. So ist beispielsweise die Einspeiseseite im Bereich der den Kontakten zugeordneten Stromschienen angeordnet, hingegen die Abgangsseite den Stromschienen des Gehäuses zugeordnet.

Weitere Merkmale der Erfindung sind in der Beschreibung der Figuren und den Figuren selbst dargestellt, wobei bemerkt wird, dass alle Merkmale und Einzelmerkmale erfindungswesentlich sind.

In den Figuren ist die Erfindung anhand mehrerer Ausführungsbeispiele dargestellt, ohne hierauf beschränkt zu sein. Es zeigt:
- Figur 1: in einer Explosionsansicht die Geräteeinheit und ortsfeste Stromschienen zur Aufnahme der Kontakte der Geräteeinheit, somit vor Inbetriebsetzung,
- Figur 2: die in Figur 1 veranschaulichten Bauelemente, bei auf die Stromschienen aufgesteckter Geräteeinheit, somit bei Betrieb,
- Figur 3: ein Detail der Geräteeinheit im Bereich einer Strornerfassungseinrichtung und eines zugehörigen Kontaktes,
- Figur 4: einen Schnitt gemäß der Linie A-A in Figur 3,
- Figur 5: entsprechend der Darstellung der Figur 3, für eine weitere Ausführungsform, die Stromerfassungseinrichtung und einen modifizierten Kontakt,
- Figur 6: einen Schnitt gemäß der Linie B-B in Figur 5,
- Figur 7: für eine weitere Ausführungsform, in einer Explosionsansicht die Geräteeinheit und ortsfeste Stromschienen zur Aufnahme der Kontakte der Geräteeinheit, somit vor Inbetriebsetzung,
- Figur 8: die in Figur 7 veranschaulichten Bauelemente, bei auf die Stromschienen aufgesteckter Geräteeinheit, somit bei Betrieb,
- Figur 9: für eine weitere Ausführungsform, in einer Explosionsansicht die Geräteeinheit und ortsfeste Stromschienen zur Aufnahme der Kontakte der Geräteeinheit, somit vor Inbetriebsetzung,
- Figur 10: die in Figur 9 veranschaulichten Bauelemente, bei auf die Stromschienen aufgesteckter Geräteeinheit, somit bei Betrieb,
- Figur 11: ein Detail der Geräteeinheit gemäß der Figuren 9 und 10, im Bereich der Stromerfassungseinrichtung und des zugehörigen Kontaktes und
- Figur 12: einen Schnitt gemäß der Linie C-C in Figur 11.

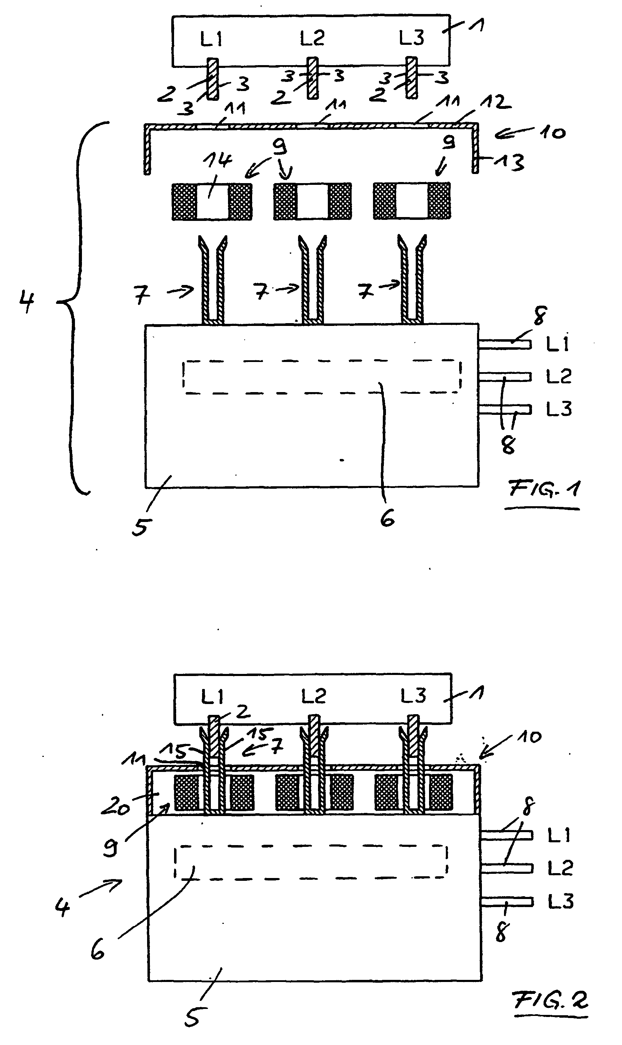

In den Figuren 1 und 2 ist ein Sammelschienenträger 1 gezeigt, in dem drei Stromschienen 2 betreffend die Phasen L1, L2 und L3 gelagert sind. Die Stromschienen 2 weisen jeweils rechteckigen Querschnitt auf und sind hochkant im Sammelschienenträger 1 gelagert und verlaufen mit deren die breite Seite bildenden Flächen 3 parallel.

Mit den Stromschienen 2 wirkt die erfindungsgemäße Geräteeinheit 4 zusammen. Sie weist ein Gehäuse 5 auf, das zumindest eine Schalteinheit 6 aufnimmt, die entsprechend dem Schaltzustand drei Kontakte 7 mit gehäuseseitigen Anschlussschienen 8 der Phasen L1, L2 und L3 elektrisch miteinander verbindet oder trennt. Zur Geräteeinheit können ferner gleichfalls innerhalb des Gehäuses angeordnete Steuer- und Schutzgeräte gehören.

Bestandteile der Geräteeinheit 4 bilden ferner drei Stromerfassungseinrichtungen 9, die beispielsweise als induktive Stromwandler ausgebildet sind, und eine haubenartige Abdeckung 10. Diese weist einen mit drei Öffnungen 11 zum Durchstecken der Kontakte 7 versehenen Deckelabschnitt 12 sowie einen Randabschnitt 13 auf.

Die jeweilige Stromerfassungseinrichtung 9 weist einen Ring auf. Dessen Durchtrittsöffnung 14 und die Öffnung 11 der Abdeckung 10 sind bezüglich ihres Querschnittes so bemessen, dass der zugeordnete Kontakt 7 durch diese hindurch gesteckt werden kann.

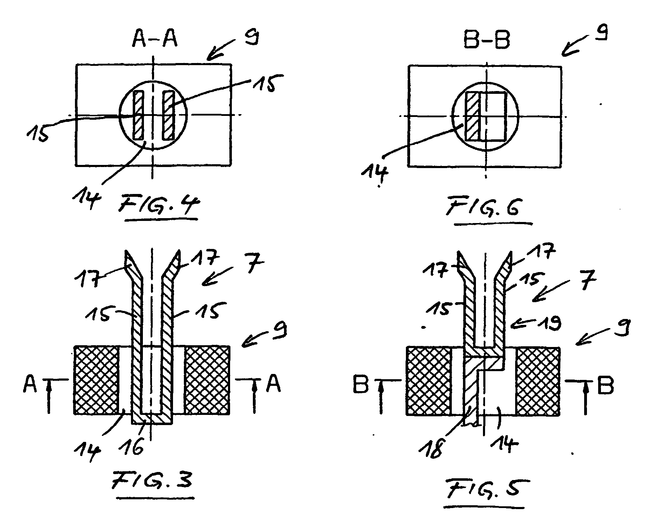

Der jeweilige Kontakt, und insofern wird ergänzend auf die Darstellung der Figuren 3 und 4 betreffend die erste Ausführungsform Bezug genommen, ist U-förmig ausgebildet. Er weist zwei parallele Kontaktschenkel 15 und einen diese verbindenden Steg 16 auf. Ober nicht näher veranschaulichte Befestigungsmittel ist der jeweilige Kontakt 7 im Bereich der der Abdeckung 10 zugewandten Wandung des Gehäuses 5 mit einem stromführenden Bauteil der zugeordneten Phase L1 bzw. L2 bzw. L3 verbunden.

Die Kontaktschenkel 15 besitzen eine recht große Länge. Dies ermöglicht es, beim Montieren der Geräteeinheit zunächst die jeweilige Stromerfassungseinrichtung 9 auf den zugeordneten Kontakt 11 aufzustecken, anschließend die Abdeckung 10 auf das Gehäuse 5 aufzusetzen, wobei die beiden Kontaktschenkel 15 die zugeordnete Öffnung 11 des Deckels 5 durchsetzen. Bei mit dem Gehäuse 5 verbundener Abdeckung 10 sind die drei Stromerfassungseinrichtungen 9 durch die Abdeckung 10 und die Kontakte 7 definiert zwischen Gehäuse 5 und Abdeckung 10 gehalten. Der aus der Abdeckung 10 herausragende Bereich des jeweiligen Kontakts 7 wird auf die Stromschienen 2 aufgesteckt, wobei die Kontaktschenkel 15 des jeweiligen Kontaktes 7 die zugeordnete Stromschiene 2 im Bereich deren beiden Flächen 3 kontaktieren.

Wie der Darstellung der Figuren 1 bis 3 zu entnehmen ist, schließen sich an die Kontaktschenkel 15 nach außen gerichtete Schenkelabschnitte 17 an, die als Einführschrägen beim Aufstecken der Geräteeinheit auf die jeweilige Stromschiene 2 dienen.

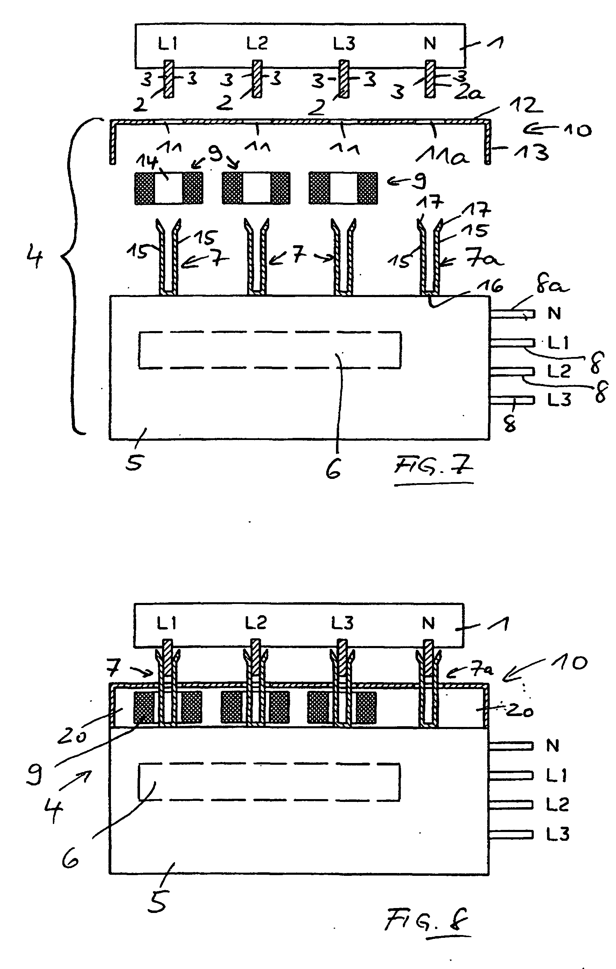

Die Ausführungsform gemäß der Figuren 5 und 6 unterscheidet sich von derjenigen nach den Figuren 1 bis 4 dadurch, dass der jeweilige Kontakt 7 modifiziert ist. Der Kontakt weist eine gehäuseseitige Anschlusslasche 18 und ein mit dieser Ober nicht näher veranschaulichte Befestigungsmittel verbundenes Kontaktstück 19 auf, das in Art des Kontaktes gemäß der Ausführungsform nach den Figuren 1 bis 4 ausgebildet ist, jedoch kürzere Kontaktschenkel 15 aufweist. Bei der Ausführungsform nach den Figuren 5 und 6 durchsetzt demzufolge die Anschlusslasche 18 weitgehend die Öffnung 14 in der Stromerfassungseinrichtung 9 und es ragt nur der Steg 16 des Kontaktstückes 19 in die Öffnung 14, womit die Kontaktschenkel 15 des Kontaktstückes 19 die Öffnung 14 des Deckels 12 der Abdeckung 10 durchsetzen und infolge dessen die Kontaktschenkel 15 bei dieser Ausführungsform nur dort vorgesehen sind, wo die Stromschiene 2 den jeweiligen Kontakt 7 kontaktiert.

Bei der insofern beschriebenen Geräteeinheit ist ein unabhängig vom Gehäuse 5 geschaffener Raum 20 zwischen Gehäuse 5 und Abdeckung 10 zur Aufnahme der Stromerfassungseinrichtungen 9 gebildet, die bei abgenommener Abdeckung 10 montiert werden. Die Geräteeinheit 4 kann unkompliziert auf Betrieb ohne Stromerfassungseinrichtungen umgerüstet werden; hierzu ist nur die Abdeckung 10 zu entnehmen und es sind die Stromerfassungseinrichtungen 9 zu entfernen, gegebenenfalls wird anschließend die Abdeckung 10 wieder montiert.

Bei dem gezeigten Ausführungsbeispiel stellen der Sammelschienenträger 1 und die Stromschienen 2 beispielsweise Teil eines Schrankes einer Niederspannungsverteilung dar. Es kann sich um die Einspeiseseite handeln, während die Stromschienen 8 die Abgangsseite darstellen.

Die Ausführungsform nach den Figuren 7 und 8 unterscheidet sich von derjenigen nach den Figuren 1 bis 4 nur dadurch, dass die Geräteeinheit heben den Kontakten für die Phasen L1, L2 und L3 mit einem Nullleiter N versehen ist. Insofern kontaktiert der entsprechend dem Kontakt 7 gestaltete Kontakt 7a des Nullleiters die Schiene 2a des Nullleiters durch eine weitere Öffnung 11a der Abdeckung 10. Entsprechend der neben den Stromschienen 2 angeordneten Schiene 2a des Nullleiters und der Position der Kontakte 7 und 7a sind das Gehäuse 5 und die Abdeckung 10 größer dimensioniert. Mit der Bezugsziffer 8a ist die Anschiussschiene des Nullleiters bezeichnet.

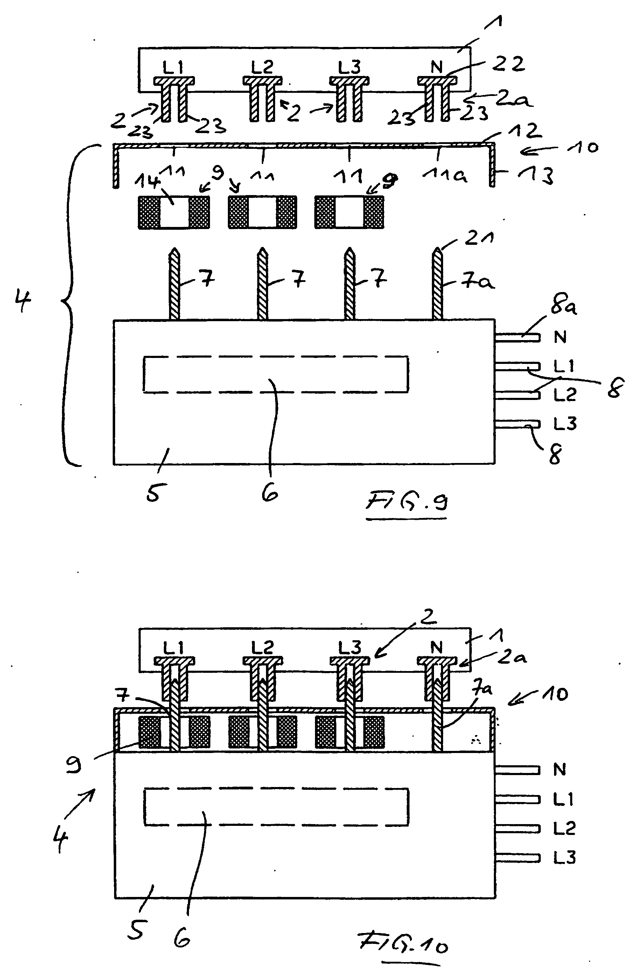

Die Ausführungsform gemäß der Figuren 9 bis 12 unterscheidet sich von den zuvor beschriebenen Ausführungsformen, insbesondere der Ausführungsform nach den Figuren 7 und 8 durch die veränderte Gestaltung der Stromschienen 2 und der Schiene 2a für den Nullleiter sowie die veränderte Gestaltung der Kontakte 7 und 7a.

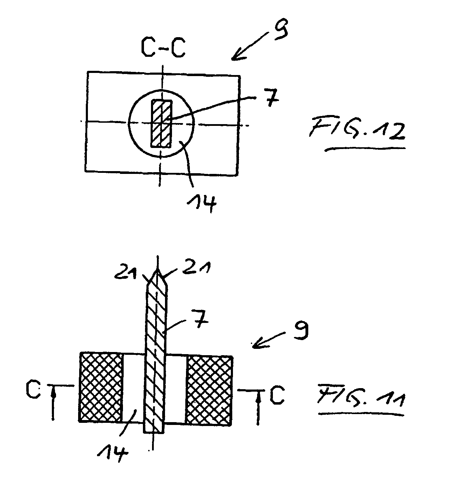

So sind bei der Ausführungsform nach den Figuren 9 bis 11 die Kontakte 7, 7a als einfache Steckelemente mit rechteckigem Querschnitt ausgebildet, die im Bereich ihrer vorderen Enden Einführschrägen 21 aufweisen. Die Stromschienen 2 bzw. die Schiene 2 weisen U-förmigen Querschnitt auf, mit einem Basisabschnitt 22 und zwei parallelen Schenkeln 23. Im Betrieb, wie es zur Figur 10 veranschaulicht ist, durchsetzen die Kontakte 7 die Stromerfassungseinrichtungen 9, des weiteren die Kontakte 7 und der Kontakt 7a die Öffnungen 11 und 11a der Abdeckung 10 und sind zwischen die Schenkel 23 der jeweiligen Stromschiene 2 bzw. 2a eingesteckt.

## Patentansprüche

1. Geräteeinheit (4) mit einem Kontakt (7) zum steckbaren Verbinden mit einer ortsfesten Stromschiene (2), wobei der Kontakt (7) außerhalb eines Gehäuses (5) angeordnet ist, das eine Schalteinheit (6) aufnimmt, **dadurch gekennzeichnet, dass** die Geräteeinheit (4) eine Abdeckung (10) und eine Stromerfassungseinrichtung (9) aufweist, wobei die Abdeckung (10) das Gehäuse (5) abdeckt und der zwischen der Abdeckung (10) und dem Gehäuse (5) gebildete Raum (20) der Aufnahme der Stromerfassungseinrichtung (9) dient, sowie der Kontakt (7) die Stromerfassungseinrichtung (9) und eine Öffnung (11) in der Abdeckung (10) durchsetzt.

2. Geräteeinheit (4) nach Anspruch 1, **dadurch gekennzeichnet, dass** der Kontakt (7) auf die Stromschiene (2) oder in diese einsteckbar ist.

3. Geräteeinheit (4) nach Anspruch 1 oder 2, **dadurch gekennzeichnet, dass** die ortsfeste Schiene (2) derart positioniert ist, dass der Kontakt (7) in Breitenerstreckung der Stromschiene (2) steckbar ist.

4. Geräteeinheit (4) nach einem der Ansprüche 1 bis 3, **dadurch gekennzeichnet, dass** der Kontakt (7) zumindest in dem mit der Stromschiene (2) in Kontakt gelangenden Bereich zwei parallele Kontaktschenkel (15, 15) aufweist.

5. Geräteeinheit (4) nach Anspruch 4, **dadurch gekennzeichnet, dass** der Kontakt (7) eine Anschlusslasche (18) und ein U-förmiges Kontaktstück (19) aufweist, wobei die Anschlusslasche (18) die Stromerfassungseinrichtung (9) durchsetzt und das Kontaktstück (19) im wesentlichen außerhalb der Stromerfassungseinrichtung (9) angeordnet ist.

6. Geräteeinheit (4) nach einem der Ansprüche 1 bis 3 **dadurch gekennzeichnet, dass** die Stromschiene (2) zwei parallele Schenkel (23) aufweist, zwischen die der Kontakt (7) einsteckbar ist.

7. Geräteeinheit (4) nach einem der Ansprüche 4 bis 6, **dadurch gekennzeichnet, dass** der Kontaktschenkel (15) bzw. die Kontaktschenkel (15, 15) die Stromerfassungseinrichtung (9) durchsetzt bzw. durchsetzen.

8. Geräteeinheit (4) nach einem der Ansprüche 1 bis 7, **dadurch gekennzeichnet, dass** die Stromerfassungseinrichtung als induktiver Stromwandler (9) ausgebildet ist.

9. Geräteinheit (4) nach einem der Ansprüche 1 bis 8, **dadurch gekennzeichnet, dass** sie mehrere Kontakte (7), insbesondere drei Kontakte (7) für drei Stromphasen (L1, L2, L3) und diesen zugeordnete Stromerfassungseinrichtungen (9) aufweist, wobei die Stromerfassungseinrichtungen (9) zwischen der Abdeckung (10) und dem Gehäuse (5) angeordnet sind.

10. Geräteeinheit (4) nach einem der Ansprüche 1 bis 9, **dadurch gekennzeichnet, dass** sie zusätzlich einen Kontakt (7a) für den Nullleiter (N) aufweist.

## Claims

1. Coupler unit (4) with a contact (7) for plug-in connection to a fixed conductor rail (2), wherein the contact (7) is arranged outside a housing (5) which receives a switching unit (6), **characterised in that** the coupler unit (4) exhibits a cover (10) and a current recording device (9), wherein the cover (1) covers the housing (5) and the space (20) formed between the cover (10) and the housing (5) serves to receive the current recording device (9) and the contact (7) passes through the current recording device (9) and an opening (11) in the cover (10).

2. Coupler unit (4) according to Claim 1, **characterised in that** the contact (7) can be fitted onto the conductor rail (2) or plugged into it.

3. Coupler unit (4) according to Claim 1 or 2, **characterised in that** the fixed rail (2) is positioned so that the contact (7) can be plugged in an extension of the width of the conductor rail (2).

4. Coupler unit (4) according to one of Claims 1 to 3, **characterised in that** the contact (7) exhibits two parallel contact legs (15, 15) at least in the area in contact with the conductor rail (2).

5. Coupler unit (4) according to Claim 4, **characterised in that** the contact (7) exhibits a connecting strap (18) and a U-shaped contact piece (19), wherein the connecting strap (18) passes through the current recording device (9) and the contact piece (19) is arranged essentially outside the current recording device (9).

6. Coupler unit (4) according to one of Claims 1 to 3, **characterised in that** the conductor rail (2) exhibits two parallel legs (23) between which the contact (7) can be plugged in.

7. Coupler unit (4) according to one of Claims 4 to 6, **characterised in that** the contact leg (15) or the contact legs (15, 15) pass(es) through the current recording device (9).

8. Coupler unit (4) according to one of Claims 1 to 7, **characterised in that** the current recording device is designed as an inductive current converter (9).

9. Coupler unit (4) according to one of Claims 1 to 8, **characterised in that** it exhibits several contacts (7), in particular three contacts (7) for three current phases (L1, L2, L3) and current recording devices (9) assigned to them, wherein the current recording devices (9)( are arranged between the cover (10) and the housing (5).

10. Coupler unit (4) according to one of Claims 1 to 9, **characterised in that** it also exhibits a contact (7a) for the neutral conductor (N).

## Revendications

1. Unité d'appareil (4) comprenant un contact (7) destiné à s'embrocher à une barre conductrice fixe (2), dans laquelle le contact (7) est disposé à l'extérieur d'un boîtier (5) qui renferme une unité de commutation (6),
**caractérisée en ce que**
l'unité d'appareil (4) comprend un couvercle (10) et un dispositif de détection de courant (9), le couvercle (10) fermant le boîtier (5), l'espace (20) formé entre le couvercle (10) et le boîtier (5) servant à loger le dispositif de détection de courant (9), et le contact (7) traversant le dispositif de détection de courant (9) et une ouverture (11) formée dans le couvercle (10).

2. Unité d'appareil (4) selon la revendication 1,
**caractérisée en ce que**
le contact (7) peut être embroché sur la barre conductrice (2) ou dans cette barre.

3. Unité d'appareil (4) selon la revendication 1 ou 2,
**caractérisée en ce que**
la barre fixe (12) est positionnée de telle manière que le contact (7) puisse être embroché dans la dimension latérale de la barre conductrice (2).

4. Unité d'appareil (4) selon une des revendications 1 à 3,
**caractérisée en ce que**
le contact (7) présente deux branches de contact parallèles (15, 15) au moins dans la région qui entre en contact avec le barre conductrice (2).

5. Unité d'appareil (4) selon la revendication 4,
**caractérisée en ce que**
le contact (7) présente une languette de connexion (18) et une pièce de contact (19) en forme de U, la languette de connexion (18) traversant le dispositif de détection de courant et la pièce de contact (19) étant disposée sensiblement à l'extérieur du dispositif de détection de courant (9).

6. Unité d'appareil (4) selon une des revendications 1 à 3,
**caractérisée en ce que**
la barre conductrice (2) présente deux branches parallèles (23) entre lesquelles le contact (7) peut être embroché.

7. Unité d'appareil (4) selon une des revendications 4 à 6,
**caractérisée en ce que**
la branche de contact (15) ou les branches de contact (15, 15) traverse(nt) le dispositif de détection de courant (9).

8. Unité d'appareil (4) selon une des revendications 1 à 7,
**caractérisée en ce que**
le dispositif de détection de courant est constitué par un convertisseur de courant inductif (9).

9. Unité d'appareil (4) selon une des revendications 1 à 8,
**caractérisée en ce qu'**
elle comprend plusieurs contacts (7), en particulier trois contacts (7) pour trois phases (L1, L2, L3), et des dispositifs de détection de courant qui leur sont associés, les dispositifs de détection de courant (9) étant disposés entre le couvercle (10) et le boîtier (5).

10. Unité d'appareil (4) selon une des revendications 1 à 9,
**caractérisée en ce qu'**
elle comprend en supplément un contact (7a) pour le conducteur de neutre (N).
